# FASCICULE DE BREVET EUROPEEN

(11) **EP 2 902 285 B1**
(45) Date de publication et mention de la délivrance du brevet: **07.09.2016**
(21) Numéro de dépôt: 15153338.7
(22) Date de dépôt: 30.01.2015
(51) Int. Cl.: B60T 17/22, B64C 25/42

(54) **Procédé de surveillance d'au moins deux actionneurs électromécaniques de freinage**
Überwachungsverfahren von mindestens zwei elektromechanischen Bremsstellgliedern
Method for monitoring at least two electromechanical braking actuators

(30) Priorité: 31.01.2014 FR 1450788
(43) Date de publication de la demande: 05.08.2015
(73) Titulaire: Messier-Bugatti-Dowty, 78140 Vélizy-Villacoublay (FR)
(72) Inventeur: Chico, Philippe, 78140 Velizy-Villacoublay (FR); Ragot, Frédéric, 78140 Velizy-Villacoublay (FR); Boningen, François, 78140 Velizy-Villacoublay (FR); Lepage, Thomas, 78140 Velizy-Villacoublay (FR)
(74) Mandataire: Parzy, Benjamin Alain

(56) Documents cités:
- DE-A1- 10 260 723
- GB-A- 2 470 251

## Description

L'invention concerne un procédé de surveillance consistant à comparer une valeur de courant représentative du courant d'alimentation d'un actionneur électromécanique de freinage avec une valeur de courant de référence estimée à partir des courants d'alimentation d'autres actionneurs.

### ARRIERE PLAN DE L'INVENTION

Un frein électromécanique d'aéronef comprend en général au moins un actionneur électromécanique comportant classiquement un poussoir et un moteur électrique adapté à déplacer le poussoir en regard d'organes de friction du frein (une pile de disques de carbone par exemple), de manière à exercer sur les organes de friction un effort de freinage tendant à ralentir l'aéronef. Pour réaliser la fonction de freinage de parc, c'est-à-dire l'immobilisation de l'aéronef sans que le pilote n'ait à appuyer continuellement sur les pédales de frein, l'actionneur électromécanique est muni d'un organe de blocage qui permet d'immobiliser sélectivement le poussoir de l'actionneur électromécanique en position.

Un tel actionneur électromécanique est alimenté électriquement et commandé par des moyens de commande externes ou internes qui reçoivent une consigne de freinage et déterminent un effort de freinage à appliquer sur les organes de frictions.

Cet actionneur électromécanique doit être associé à des moyens de surveillance efficaces destinés à vérifier régulièrement que l'actionneur électromécanique fonctionne correctement. Il est en effet fondamental pour la sécurité de l'aéronef d'assurer, d'une part, que l'effort de freinage commandé est bien appliqué, et d'autre part, qu'un effort de freinage n'est pas appliqué de manière intempestive. Il est aussi fondamental de connaître l'état réel de l'organe de blocage de l'actionneur électromécanique, et de détecter un éventuel dysfonctionnement de cet organe de blocage, par exemple un verrouillage accidentel de celui-ci.

La mise en oeuvre des moyens de surveillance existants conduit souvent à une augmentation de masse non négligeable de l'actionneur électromécanique ou à l'ajout de capteurs additionnels associés à l'actionneur électromécanique. De plus, les moyens de surveillance existant sont souvent sensibles à des perturbations environnementales (thermiques, électromagnétiques, etc.) que subissent les actionneurs électromécaniques.

GB 2 470 251 A divulgue un procédé de surveillance d'une pluralité d'actionneurs électromécaniques de freinage de roue d'aéronef, chaque actionneur électromécanique étant alimenté au moyen d'un courant d'alimentation pour appliquer sélectivement un effort de freinage sur des organes de friction.

### OBJET DE L'INVENTION

L'invention a pour objet un procédé de surveillance d'actionneurs électromécaniques de freinage très peu sensible aux perturbations environnementales et pouvant être mis en oeuvre sans augmentation de masse.

### RESUME DE L'INVENTION

L'invention sera mieux comprise à la lumière de la description qui suit en référence aux figures des dessins annexés parmi lesquelles :
- la figure 1 représente schématiquement une architecture d'un système de freinage d'un aéronef dans lequel le procédé de surveillance de l'invention est mis en oeuvre ;
- la figure 2 est un schéma fonctionnel représentant le procédé de surveillance de l'invention.

### BREVE DESCRIPTION DES DESSINS

En vue de la réalisation de ce but, on propose un procédé de surveillance d'au moins deux actionneurs électromécaniques de freinage de roue d'aéronef, chaque actionneur électromécanique étant alimenté au moyen d'un courant d'alimentation pour appliquer sélectivement un effort de presse sur des organes de friction. Le procédé de surveillance comporte l'étape d'activer les actionneurs électromécaniques, et, pour chaque actionneur électromécanique, les étapes de :
- déterminer une valeur de courant représentative du courant d'alimentation de l'actionneur électromécanique ;
- déterminer une valeur de courant de référence estimée à partir des courants d'alimentation d'au moins un autre actionneur électromécanique ;
- comparer la valeur de courant représentative et la valeur de courant de référence ;
- détecter un fonctionnement anormal de l'actionneur électromécanique lorsque la différence entre la valeur de courant représentative et la valeur de courant de référence est supérieure à un seuil prédéterminé.

Ainsi, le fonctionnement anormal de l'actionneur électromécanique est détecté par détermination puis par analyse de la valeur de courant représentative de son courant d'alimentation et de la valeur de courant de référence, lesdites déterminations et analyse pouvant être réalisées grâce à des moyens préexistants (capteurs de courant, etc.). La mise en oeuvre du procédé de surveillance de l'invention ne nécessite donc pas l'utilisation d'équipements additionnels et peut donc être réalisée sans augmentation de masse.

Si un fonctionnement anormal de l'actionneur électromécanique est détecté, le système de freinage est ainsi capable d'avertir le pilote de l'aéronef et/ou de générer un message de panne. Le système de freinage peut alors se reconfigurer pour tenter de remettre l'actionneur électromécanique dans des conditions de fonctionnement normales.

De plus, comme la détection du fonctionnement anormal des actionneurs est basée sur l'analyse de la différence entre la valeur de courant représentative et la valeur de courant de référence, on réduit fortement l'influence sur la détection de perturbations environnementales en comparant des courants d'alimentation de moteurs d'actionneurs qui sont soumis de la même manière ou presque à ces perturbations environnementales, notamment à la température (actionneurs d'un même frein ou de freins de deux roues proches, ou actionneurs alimentés par un même contrôleur, etc.).

### DESCRIPTION DETAILLEE DE L'INVENTION

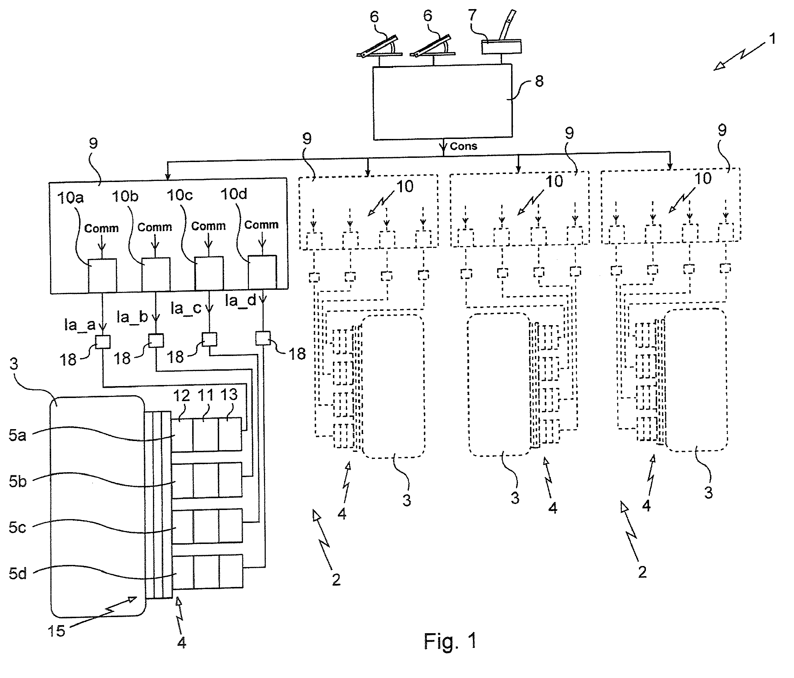

En référence à la figure 1, l'invention est ici mise en oeuvre sur un aéronef 1 comportant deux atterrisseurs principaux 2 portant chacun deux roues 3 équipées de freins électromécaniques 4. Chaque frein électromécanique 4 comporte quatre actionneurs électromécaniques de freinage 5a, 5b, 5c, 5d.

Les freins 4 des roues 3 de l'aéronef 1 sont actionnés par un système de freinage qui, outre les actionneurs électromécaniques 5, comporte deux pédales de frein 6, un levier de freinage de parc 7, un unique calculateur de freinage 8 et quatre contrôleurs de freinage 9. Chaque contrôleur de freinage 9 comporte quatre modules de puissance 10a, 10b, 10c, 10d connectés chacun à un actionneur électromécanique 5a, 5b, 5c, 5d du frein 4 d'une même roue 3.

Chaque actionneur électromécanique 5 comporte un moteur électrique 11, un poussoir 12 entraîné par le moteur électrique 11 et un organe de blocage 13 adapté à bloquer en position de poussoir 12.

Le poussoir 12 est actionné par le moteur électrique 11 pour appliquer sélectivement un effort de freinage commandé sur des organes de friction du frein 4 associé, en l'occurrence sur une pile de disques 15. Cet effort de freinage commandé induit des efforts de friction entre des rotors et des stators de la pile de disques 15 et contribue à ralentir la rotation de la roue 3 associée et donc à freiner l'aéronef 1.

L'organe de blocage 13 est ici un frein à manque de courant qui, lorsqu'il est alimenté, laisse libre le poussoir 12 de l'actionneur électromécanique 5 de se déplacer sous l'action du moteur électrique 11 mais, lorsqu'il n'est plus alimenté, bloque le poussoir 12 en position.

Les freins 4 des roues 3 de l'aéronef 1 sont donc commandables pour freiner l'aéronef 1 lorsque l'aéronef 1 est au sol, et sont adaptés à mettre en oeuvre un mode de freinage commandé et un mode de freinage de parc.

Le freinage de l'aéronef 1 en mode commandé est activé soit par l'action d'un pilote de l'aéronef 1 sur les pédales de frein 6, soit en réponse à une sélection par le pilote d'un niveau de décélération déterminé (fonction « autobrake »).

Le calculateur de freinage 8 génère alors une consigne de freinage Cons transmise à chaque contrôleur de freinage 9 et transformée en une commande d'effort de freinage Comm elle-même transmise aux modules de puissance 10 des contrôleurs de freinage 9. Chaque module de puissance 10a, 10b, 10c, 10d fournit en fonction de cette commande de freinage Comm un courant d'alimentation Ia_a, Ia_b, Ia_c, Ia_d au moteur électrique 11 de l'actionneur électromécanique 5a, 5b, 5c, 5d auquel il est connecté, de sorte que les freins 4 génèrent un effort de freinage permettant de freiner et de ralentir l'aéronef 1.

Le freinage de l'aéronef 1 en mode de parc est activé par l'action du pilote sur le levier de freinage de parc 7. Dans le mode de freinage de parc, le poussoir 12 est commandé pour exercer sur la pile de disques 15 un effort de parc, puis est bloqué en position par l'organe de blocage 13.

Dans le mode de réalisation décrit ici, le procédé de surveillance de l'invention vise à détecter un verrouillage accidentel d'un organe de blocage 13 d'un actionneur électromécanique 5 du frein 4 d'une roue 3 en comparant le courant d'alimentation Ia du moteur électrique 11 de cet actionneur électromécanique 5 avec les courants d'alimentation Ia des autres moteurs électriques 11 des autres actionneurs électromécaniques 5 de la même roue 3.

On décrira donc le procédé de l'invention en référence à une unique roue 3 équipé d'un frein 4 comportant quatre actionneurs électromécaniques 5a, 5b, 5c, 5d, cette description étant aussi applicable aux autres roues 3 de l'aéronef 1.

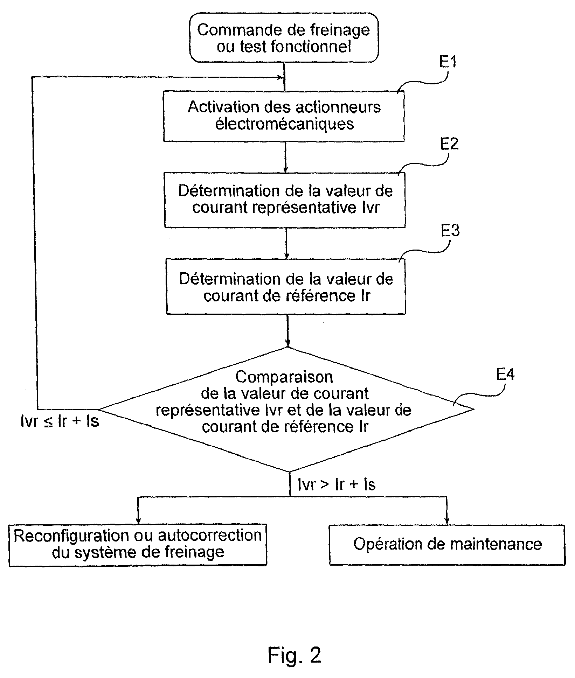

En référence à la figure 2, le procédé de surveillance de l'invention peut être mis en oeuvre suite à une commande de freinage ou au cours d'un test fonctionnel. Le procédé de surveillance comporte tout d'abord une étape E1 au cours de laquelle les actionneurs électromécaniques 5 de la roue 3 sont activés.

Puis, le procédé de surveillance de l'invention comporte un certain nombre d'étapes réalisées pour chaque actionneur électromécanique 5a, 5b, 5c, 5d l'un après l'autres, et destinées à vérifier que l'organe de blocage 13 dudit actionneur électromécanique 5a, 5b, 5c, 5d n'est pas anormalement verrouillé.

Ainsi, pour l'actionneur électromécanique 5a, le procédé de surveillance de l'invention comporte une étape E2 consistant à déterminer une valeur de courant représentative Ivr_a du courant d'alimentation Ia_a du moteur électrique 11 de l'actionneur électromécanique 5a.

Cette valeur représentative Ivr_a est ici une valeur absolue d'une estimation Ie_a du courant d'alimentation Ia_a du moteur électrique 11 de l'actionneur électromécanique 5a.

L'estimation Ie_a du courant d'alimentation Ia_a du moteur électrique 11 de l'actionneur électromécanique 5a est ici une valeur moyenne sur une certaine période T du courant d'alimentation Ia_a mesuré par un capteur de courant 18 (visible sur la figure 1) connecté au moteur 11 de l'actionneur électromécanique 5a. Chaque moteur 11 de chaque actionneur électromécanique 5 de chaque frein 4 de chaque roue 3 est ainsi connecté à un capteur de courant 18.

Le procédé de l'invention comporte ensuite une étape E3 consistant à déterminer une valeur de courant de référence Ir_a estimée à partir des courants d'alimentation Ia d'au moins un autre moteur électrique 11 d'un autre actionneur électromécanique 5. En l'occurrence, la valeur de courant de référence Ir_a est ici estimée à partir des courants d'alimentation Ia_b, Ia_c, Ia_d des moteurs 11 des actionneurs électromécaniques 5b, 5c, 5d.

Cette valeur de courant de référence Ir_a est ici une moyenne de valeurs absolues d'estimations Ie_b, Ie_c, Ie_d des courants d'alimentation des moteurs 11 des actionneurs électromécaniques 5b, 5c, 5d. Les estimations Ie_b, Ie_c, Ie_d sont ici des valeurs moyennes sur la certaine période T des courants d'alimentation Ia_b, Ia_c, Ia_d mesurés par les capteurs de courant 18 associés.

Le procédé de l'invention comporte ensuite une étape E4 au cours de laquelle la valeur de courant représentative Ivr_a et la valeur de courant de référence Ir_a, c'est-à-dire en l'occurrence la valeur absolue de l'estimation Ie_a et la moyenne des valeurs absolues des estimations Ie_b, Ie_c, Ie_d, sont comparées. Si la différence entre la valeur de courant représentative Ivr_a et la valeur de courant de référence Ir_a est supérieure à un seuil de courant prédéterminé Is, alors un verrouillage accidentel de l'organe de blocage 13 de l'actionneur électromécanique 5a est détecté. Dans ce cas, l'actionneur électromécanique 5a est identifié et son fonctionnement anormal est signalé. Une action de reconfiguration du système de freinage ou une action de correction peuvent être commandées, pour tenter de corriger le verrouillage accidentel de l'organe de blocage 12 et pour remettre l'actionneur électromécanique 5a dans des conditions de fonctionnement normales. Si l'action de reconfiguration ou l'action de correction ne permettent pas de remettre l'actionneur électromécanique 5a dans les conditions de fonctionnement normales, l'actionneur électromécanique 5a est désactivé, un message de panne est envoyé et une opération de maintenance est commandée, ladite opération de maintenance consistant à effectuer directement un test sur l'actionneur électromécanique 5a ou à remplacer celui-ci.Si la différence entre la valeur de courant représentative Ivr_a et la valeur de courant de référence Ir_a est inférieure ou égale au seuil de courant prédéterminé Is, un fonctionnement normal de l'actionneur électromécanique 5a est détecté.

Les étapes qui viennent d'être décrites sont ensuite effectuées pour chaque autre actionneur électromécanique 5b, 5c, 5d.

On note que, dans le cas du procédé de surveillance décrit ici, où le fonctionnement anormal de l'actionneur électromécanique 5 détecté est un verrouillage accidentel de l'organe de blocage 12 dudit actionneur électromécanique 5, il est préférable, pour chaque actionneur électromécanique 5 surveillé, de définir la valeur de courant représentative Ivr et la valeur de courant de référence Ir à partir de courants d'alimentation Ia mesurés au cours de phases de fonctionnement à vide de l'actionneur électromécanique 5. Une phase de fonctionnement à vide correspond à un mouvement d'approche ou à un mouvement d'éloignement du poussoir 12 de la pile de disques 15, au cours desquels le poussoir 12 se déplace vers la pile de disques 15 ou s'éloigne de la pile de disques 15 sans être en contact avec celle-ci. Lors de tels mouvements d'approche ou d'éloignement, le courant d'alimentation Ia du moteur électrique 11 de l'actionneur électromécanique 5 concerné est sensiblement constant et faible, la vitesse du poussoir 12 est stable, sensiblement constante, et la position du poussoir 12 varie linéairement.

L'invention n'est pas limitée au mode de mise en oeuvre particulier qui vient d'être décrit, mais, bien au contraire, couvre toute variante entrant dans le cadre de l'invention telle que définie par les revendications.

Bien que l'on ait décrit l'invention dans un aéronef comportant un système de freinage présentant une certaine architecture, l'invention peut bien sûr être mise en oeuvre dans un aéronef comportant un système de freinage conçu différemment.

Bien que, dans le procédé de surveillance décrit ici, on ait pris l'exemple d'un frein à manque de courant comme organe de blocage de l'actionneur électromécanique, l'invention peut s'appliquer à tout type d'organe de blocage.

Bien que, dans le procédé de surveillance décrit ici, on compare un courant d'alimentation d'un moteur d'un actionneur électromécanique aux courants d'alimentation des moteurs des autres actionneur électromécaniques de la même roue ou à la moyenne des courants d'alimentation de tous les actionneurs de la roue, il est possible de comparer un courant d'alimentation d'un moteur d'un actionneur avec celui d'un moteur d'un actionneur d'une autre roue. Le procédé de surveillance est ainsi par exemple applicable à un système de freinage d'un véhicule quelconque comportant deux roues équipées chacune d'un frein comportant un seul actionneur électromécanique.

Bien que l'on ait indiqué que les valeurs d'estimations Ie_a, Ie_b, Ie_c, Ie_d des courants d'alimentations des moteurs sont des valeurs moyennes sur une certaine période T, ces valeurs d'estimation peuvent aussi être des valeurs instantanées des courants d'alimentation ou tout autre type de valeur permettant d'estimer ces courants d'alimentation.

Bien que l'on ait indiqué ici que le fonctionnement anormal de l'actionneur électromécanique détecté est un verrouillage accidentel de l'organe de blocage, le fonctionnement anormal détecté peut être différent (blocage accidentel du poussoir, grippage ou usure interne à l'actionneur, etc.).

## Revendications

1. Procédé de surveillance d'au moins deux actionneurs électromécaniques (5) de freinage de roue d'aéronef, chaque actionneur électromécanique (5) étant alimenté au moyen d'un courant d'alimentation (Ia) pour appliquer sélectivement un effort de freinage sur des organes de friction (15), le procédé de surveillance comportant l'étape d'activer les actionneurs électromécaniques (5), et, pour chaque actionneur électromécanique (5), les étapes de :
- déterminer une valeur de courant représentative (Ivr) du courant d'alimentation de l'actionneur électromécanique **caractérisé par** les étapes suivantes:
- déterminer une valeur de courant de référence (Ir) estimée à partir des courants d'alimentation d'au moins un autre actionneur électromécanique (5) ;
- comparer la valeur de courant représentative et la valeur de courant de référence ;
- détecter un fonctionnement anormal de l'actionneur électromécanique (5) lorsque la différence entre la valeur de courant représentative et la valeur de courant de référence est supérieure à un seuil prédéterminé (Is).

2. Procédé de surveillance selon la revendication 1, dans lequel la valeur de courant représentative (Ivr) est une valeur absolue d'une estimation du courant d'alimentation de l'actionneur électromécanique (5).

3. Procédé de surveillance selon l'une des revendications précédentes, dans lequel la valeur de courant de référence (Ir) est une moyenne de valeurs absolues d'estimations des courants d'alimentations concernés.

4. Procédé de surveillance selon les revendications 2 et 3, dans lequel les estimations des courants d'alimentation sont des valeurs moyennes ou des valeurs instantanées des courants d'alimentation.

5. Procédé de surveillance selon l'une des revendications précédentes, dans lequel la valeur de courant représentative (Ivr) et la valeur de courant de référence (Ir) sont obtenues à partir de courants d'alimentation mesurés au cours de phases de fonctionnement à vide des actionneurs électromécaniques (5).

6. Procédé de surveillance selon l'une des revendications précédentes comportant en outre, suite à la détection d'un fonctionnement anormal d'un actionneur électromécanique, les étapes de :
- identifier l'actionneur électromécanique présentant le fonctionnement anormal ;
- signaler le fonctionnement anormal de l'actionneur électromécanique ;
- effectuer une action de correction ou de reconfiguration pour tenter de remettre l'actionneur électro-mécanique dans des conditions de fonctionnement normales ;
- désactiver l'actionneur électromécanique présentant un fonctionnement anormal si l'action de correction ou de reconfiguration ne permet pas de remettre l'actionneur électromécanique dans les conditions de fonctionnement normales.

## Patentansprüche

1. Verfahren zur Überwachung von mindestens zwei elektromechanischen Aktoren (5) zum Bremsen eines Luftfahrzeugrades, wobei jeder elektromechanische Aktor (5) mittels eines Speisestroms (la) gespeist wird, um selektiv eine Bremskraft auf Reibelemente (15) auszuüben, wobei das Überwachungsverfahren den Schritt des Aktivierens der elektromechanischen Aktoren (5) umfasst, sowie für jeden elektromechanischen Aktor (5) die Schritte:
- Bestimmen eines repräsentativen Stromwertes (Ivr) des Speisestroms des elektromechanischen Aktors, **gekennzeichnet durch** die folgenden Schritte:
- Bestimmen eines Referenz-Stromwertes (Ir), der anhand von Speiseströmen mindestens eines weiteren elektromechanischen Aktors (5) geschätzt wird;
- Vergleichen des repräsentativen Stromwertes und des Referenz-Stromwertes;
- Erfassen eines anomalen Betriebs des elektromechanischen Aktors (5), wenn die Differenz zwischen dem repräsentativen Stromwert und dem Referenz-Stromwert größer als ein vorgegebener Schwellwert (Is) ist.

2. Überwachungsverfahren nach Anspruch 1, bei dem der repräsentative Stromwert (Ivr) ein absoluter Wert einer Schätzung des Speisestroms des elektromechanischen Aktors (5) ist.

3. Überwachungsverfahren nach einem der vorhergehenden Ansprüche, bei dem der Referenz-Stromwert (Ir) ein Mittelwert der absoluten Werte der Schätzungen der betreffenden Speisesströme ist.

4. Überwachungsverfahren nach den Ansprüchen 2 und 3, bei dem die Schätzungen der Speiseströme mittlere Werte oder Momentwerte der Speiseströme sind.

5. Überwachungsverfahren nach einem der vorhergehenden Ansprüche, bei dem der repräsentative Stromwert (Ivr) und der Referenz-Stromwert (Ir) aus Speiseströmen erhalten werden, die während Leerlaufphasen der elektromechanischen Aktoren (5) gemessen werden.

6. Überwachungsverfahren nach einem der vorhergehenden Ansprüche, ferner umfassend nach dem Erfassen eines anomalen Betriebs eines elektromechanischen Aktors die Schritte:
- Identifizieren des elektromechanischen Aktors, der den anomalen Betrieb aufweist,
- Signalisieren des anomalen Betriebs des elektromechanischen Aktors;
- Durchführen einer Korrektur- oder Rekonfigurationsmaßnahme, um zu versuchen, den elektromechanischen Aktor auf normale Betriebsbedingungen zurückzubringen;
- Deaktivieren des elektromechanischen Aktors, der einen anomalen Betrieb aufweist, wenn die Korrektur- oder Rekonfigurationsmaßnahme es nicht ermöglicht, den elektromechanischen Aktor auf die normalen Betriebsbedingungen zurückzubringen.

## Claims

1. Method for monitoring at least two aircraft wheel electromechanical braking actuators (5), each electromechanical actuator (5) being powered by means of a power supply current (Ia) to selectively apply a braking force to friction members (15), the monitoring method comprising the step of activating the electromechanical actuators (5), and, for each electromechanical actuator (5), the steps of:
- determining a current value (Ivr) representative of the power supply current of the electromechanical actuator;
- determining a reference current value (Ir) estimated from the power supply currents of at least one other electromechanical actuator (5);
- comparing the representative current value and the reference current value;
- detecting an abnormal operation of the electromechanical actuator (5) when the difference between the representative current value and the reference current value is above a predetermined threshold (Is).

2. Monitoring method according to Claim 1, in which the representative current value (Ivr) is an absolute value of an estimation of the power supply current of the electromechanical actuator (5).

3. Monitoring method according to one of the preceding claims, in which the reference current value (Ir) is an average of absolute values of estimations of the power supply currents concerned.

4. Monitoring method according to Claims 2 and 3, in which the estimations of the power supply currents are average values or instantaneous values of the power supply currents.

5. Monitoring method according to one of the preceding claims, in which the representative current value (Ivr) and the reference current value (Ir) are obtained from power supply currents measured during offload operating phases of the electromechanical actuators (5).

6. Monitoring method according to one of the preceding claims, further comprising, following the detection of an abnormal operation of an electromechanical actuator, the steps of:
- identifying the electromechanical actuator exhibiting the abnormal operation;
- signalling abnormal operation of the electromechanical actuator;
- performing a corrective or reconfiguration action to try to restore the electromechanical actuator to normal operating conditions;
- deactivating the electromechanical actuator exhibiting an abnormal operation if the corrective or reconfiguration action does not make it possible to restore the electromechanical actuator to the normal operating conditions.
